# EUROPEAN PATENT APPLICATION

(11) **EP 2 055 896 A1**
(43) Date of publication of application: **06.05.2009**
(21) Application number: 07021315.2
(22) Date of filing: 31.10.2007
(51) Int. Cl.: F01D 5/14, F01D 11/08

(54) **Bucket for a turbine of a thermal power plant having a foot section**

(71) Applicant: SIEMENS AKTIENGESELLSCHAFT, 80333 München (DE)
(72) Inventor: Rosic, Budimir, 1 JJ Thomson Avenue CB30DY Cambridge (GB); De Lazzer, Armin, 45479 Müllheim an der Ruhr (DE)

(57) **Abstract**

A bucket (20; 22) for a turbine (10) of a thermal power plant is provided. The turbine (10) has a rotor axis (14) and a main flow channel (18) for ducting a propulsion fluid in a flow direction (19) along the rotor axis (14), the bucket (20; 22) comprising a foot section (24; 134) for mounting the bucket (20; 22) within the turbine (10), wherein the foot section (24; 134) has an exposed portion (25; 135), which is in the mounted state exposed to the propulsion fluid and comprises an upstream surface (44; 144) and a flow channel surface (46; 146), wherein the upstream surface (44; 144) extends transversely to the rotor axis (14) and faces opposite to the flow direction (19), and the flow channel surface (46; 146) partially delimits the main flow channel surface (18) in a radial direction. According to the invention a transition surface (48; 148) is provided connecting the upstream surface (44; 144) and the flow channel surface (46; 146), which transition surface (48; 148) has a rounded profile in a sectional view along said rotor axis (14).

## Description

### Field of the invention

This invention relates to a bucket for a turbine of a thermal power plant, the turbine having a rotor axis and a main flow channel for ducting a propulsion fluid in a flow direction along the rotor axis, which propulsion fluid is used for powering the turbine, the bucket comprising a foot section for mounting the bucket within the turbine, wherein the foot section has an exposed portion, which is in the mounted state exposed to the propulsion fluid and comprises an upstream surface and a flow channel surface, wherein the upstream surface extends transversely to the rotor axis and faces opposite to the flow direction, and the flow channel surface partially delimits the main flow channel in a radial direction. The bucket can be a rotor bucket or a guide bucket. In case of a rotor bucket the foot section is for mounting the bucket to a rotor shaft of the turbine. In case of a guide bucket the foot section is for mounting the bucket to a housing of the turbine.

Further, the present invention relates to a turbine for a thermal power plant comprising such a rotor bucket.

### Background of the invention

In a turbine for a thermal power plant a propulsion fluid or working fluid, usually in the form of steam or air, is expected to follow a predefined path, the so-called flow-path in a main flow channel of the turbine.

For a typical turbine configuration the propulsion fluid alternately passes stationary rings of guide buckets and rings of rotor buckets, which rotor buckets are mounted on a rotor shaft of the turbine. The propulsion fluid interacts with the blade sections of the buckets and thereby rotates the rotor buckets to propel the rotor shaft. The rotor shaft typically is connected to a generator, which converts the mechanical energy of the rotor shaft into electrical energy. In such a turbine the rotating components are sealed against stationary components of the turbine. The sealing is required to prohibit the propulsion fluid to bypass the blade sections of the turbine buckets. Such a sealing is for example provided between a shroud of a guide bucket and the rotor shaft.

The sealing technology typically used is configured such that under all possible boundary conditions of operation contact between the rotating components and the stationary components is avoided to protect the turbine from mechanical damage. Due to comparatively large axial and radial movements of the stationary components and the rotating components relative to one another during operation of the turbine the sealing designs usually are of the so-called non-contacting sealing type. In this sealing type there is no sealing device contacting both components. Instead, residual axial and radial clearances are remaining, which means a so-called sealing cavity between the respective components is provided.

On the other hand, the existence of clearance between the stationary parts and the rotating parts is a source of losses with respect to the possible amount of work which can be extracted from the propulsion fluid, since part of the propulsion fluid can bypass the main flow channel. Conventional sealing designs therefore provide so-called sealing fins on surfaces facing in a radial direction with respect to the rotor shaft, for example on the surface of a shroud of a guide bucket facing towards the rotor of the turbine. The throttling effect of such fins limits the amount of leakage fluid being diverted from the main fluid flow of the propulsion fluid. After passing through the sealing cavity between the shroud of the guide bucket and the rotor shaft, the leakage fluid flow streams against an exposed portion of a foot section of a neighbouring rotor bucket and is thereby directed back into the main flow channel at a steep angle with respect to the axial extension of the turbine.

### Summary of the invention

It is an object of the present invention to provide a turbine for a thermal power plant of the above mentioned type, which provides an improved power output during operation. Put in different words, it is an object of the invention to increase the amount of work, which can be extracted during operation of the turbine from a propulsion fluid of a given pressure and temperature.

The above object is achieved according to the present invention by providing a bucket of the afore-mentioned kind, which comprises a transition surface connecting in the upstream surface and the flow channel surface. The transition surface has a rounded profile in a sectional view along the rotor shaft. The above object is further achieved according to the present invention by providing a turbine comprising such a bucket.

Put in different words, the foot section of the bucket has an exposed portion, which is in the mounted state not inserted into the rotor shaft in case of a rotor bucket or into the housing in case of a guide bucket, and is therefore exposed to the propulsion fluid. The exposed portion preferably sticks out of the rotor shaft or the housing in a radial direction thereof. The exposed portion has a flow channel surface, which faces radially outwards with respect to the rotor shaft or the housing and therefore delimits the main flow channel of the turbine in a radial direction. Further, the exposed portion has an upstream surface, which is oriented transversely with respect to the flow direction and faces opposite to the flow direction. Preferably, the upstream surface extends radially with respect to the rotor shaft. Typically, the bucket extends in the mounted state essentially in a radial direction with the respect to the rotor shaft and the flow channel surface advantageously extends transversely with respect to the extension of the rotor bucket. The upstream surface and the flow channel surface are therefore typically oriented roughly perpendicularly to each other. The upstream surface and the flow channel surface are connected by a transition surface, which has a rounded profile in a longitudinal sectional view of the turbine that means in a sectional view along the rotor shaft. Preferably, the transition surface has a convex shape. By providing the transition surface, an edge between the upstream surface and the flow channel surface is rounded off.

The transition surface according to the invention acts as a guiding surface for a leakage fluid flow exiting a sealing cavity between a neighbouring guide bucket and the rotor shaft in case the bucket according to the invention is a rotor bucket. In case, the bucket according to the invention is a guide bucket, the transition surface acts as a guiding surface for a leakage fluid exiting a sealing cavity between a neighbouring rotor bucket and the housing of the turbine. As mentioned before, typically a sealing cavity of a non-contacting seal is arranged between a shroud of a guide bucket and the rotor shaft or a shroud of a rotor bucket and the housing. Leakage fluid diverted off the propulsion fluid from the main flow channel flows through this cavity and streams against the upstream surface of the exposed portion of the respective bucket, which bucket is arranged downstream to the bucket partly delimiting the cavity. The rounded off transition surface causes the leakage fluid to the re-enter the main flow channel under a flat or a small angle with respect to the rotor axis.

The shape of the transition surface therefore prevents the leakage fluid to re-enter the main flow channel in a steep angle with respect to the rotor axis. As the propulsion fluid in the main flow channel roughly flows in a direction parallel to the rotor axis, the leakage fluid flow re-entering the main flow channel is according to the invention already aligned to the main fluid flow to a large extent. Therefore, the re-entering of the leakage fluid is achieved without generating major turbulences in the propulsion fluid in the main flow channel, which reduces a possible loss in momentum in the main fluid flow. Further, the leakage fluid flow does not penetrate into the main flow channel to a large extent and therefore does not disturb the main fluid flow on a larger cross section. Overall, the inventive measures reduce possible disturbing effects of the leakage fluid flow on the main fluid flow in the main flow channel and therefore improve the efficiency in power output of the turbine during operation.

In an advantageous embodiment according to the invention the upstream surface is located at an upstream end of the exposed portion, which upstream end has a given projection height. The given projection height is the distance by which the upstream end projects in the mounted state radially from the rotor shaft and the housing, respectively, wherein the transition surface extends over at least 20%, preferably at least 30%, of the given projection height. Put in different words, the exposed portion sticks out from the rotor shaft and the housing, respectively, in a radial direction thereof. In case of a rotor bucket an upstream side of the exposed portion sticks out or projects with respect to the rotor shaft by a given projection height, that means the flow channel surface is displaced in a radial direction with respect to the circumferential surface of the rotor shaft in the area of the upstream end of the exposed portion by the given protection height. The transition surface having the rounded profile extends over at least 20% of the given protection height. That means the profile of the exposed portion is rounded in an upper area of the exposed portion on the upstream end thereof, which upper area extends in a radial direction with respect to the rotor shaft over at least 20%, preferably at least 30% of the protection height.

It is further advantageous, if the upstream surface comprises an abutting section configured for abutting to the rotor shaft or the housing, depending on the type of bucket, which abutting section has a rounded profile in sectional view along the rotor axis. Preferably, the abutting section has a concave shape. The rounded profile of the abutting section forms a smooth transition between the surface of the rotor shaft or the inner surface of the housing and the upstream surface. This has a guiding effect for the leakage fluid flow exiting the sealing cavity and reduces possible turbulences in the leakage fluid flow. The rounded profile of the abutting section therefore improves the smoothness of the leakage fluid flow and facilitates the leakage fluid flow to enter into the main flow channel without causing additional turbulences in the main fluid flow.

In a further advantageous embodiment the upstream surface and the transition surface together have an "s"-shaped profile in the sectional view along the rotor shaft. Therefore, the leakage fluid flow is smoothly guided into the main flow channel after exiting the sealing cavity.

In an advantageous embodiment of the turbine according to the invention the turbine further comprises a second bucket, which is arranged radially with respect to the rotor axis and has an end portion facing in a radial direction with respect to the rotor axis. The second bucket is preferably of an alternate type as compared to the first bucket, i.e. if the first bucket is a rotor bucket the second bucket preferably is a guide bucket and vice versa. The end portion of the second bucket can for example be a shroud. The end portion of the second bucket and the upstream surface of the first bucket are separated from each other by a gap having a given axial extension, wherein at least a segment of the rounded profile of the transition surface has a radius of curvature of at least 50%, preferably at least 100% of the axial extension of the gap. It is further preferable, if the rounded profile is in the shape of a segment of a circle, for example a quarter circle, wherein the circle also has a radius of curvature in the above mentioned range. By providing at least a segment of the rounded profile with the above mentioned radius of curvature, the previously explained advantageous effects of the invention are achieved particularly well.

It is further advantageous, if the first bucket is a rotor bucket and the turbine further comprises a guide bucket mounted adjacent to the rotor bucket in an upstream direction therefrom, such that a sealing cavity between the rotor shaft and the guide bucket is formed, wherein the exposed portion of the rotor bucket is directly exposed to a leakage fluid flow of the propulsion fluid leaking through the sealing cavity during the operation of the turbine.

### Brief description of the drawings

A detailed description of the present invention is provided herein below with reference to the following diagrammatic drawings, in which:
- Fig. 1: is a partial sectional view of a first embodiment of a turbine according to the present invention comprising a rotor bucket having a foot section;
- Fig. 2: is a more detailed view of the turbine according to fig. 1 in the area of the foot section of the rotor bucket; and
- Fig. 3: is a partial sectional view of a second embodiment of a turbine according to the present invention comprising a guide bucket having a foot section.

### Description of a preferred embodiment

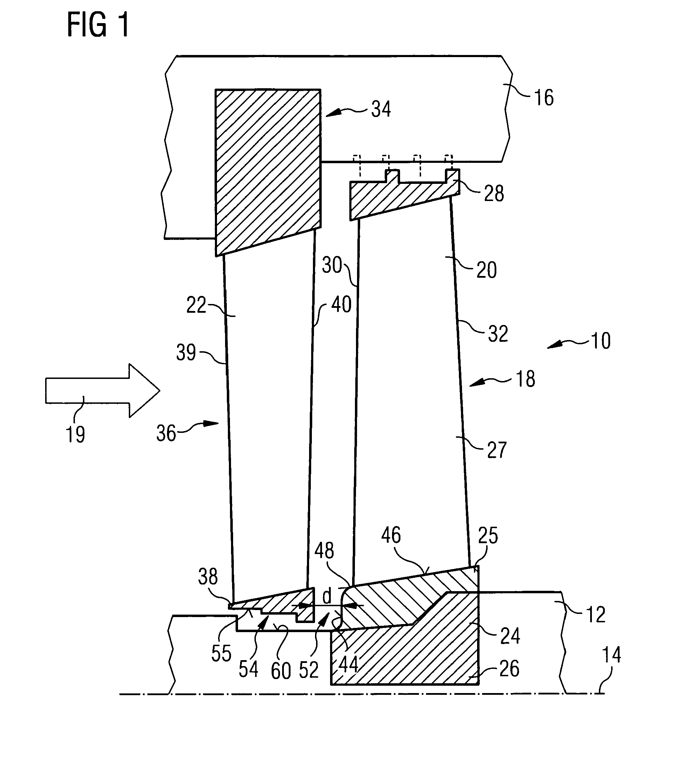

Fig. 1 shows a portion of a turbine 10 in a first embodiment according to the invention. The turbine 10 comprises a rotor shaft 12 having a rotational axis 14. The turbine 10 further includes a housing 16 surrounding the rotor shaft 12 at a radial distance therefrom. Between the rotor shaft 12 and the housing 16 a main flow channel 18 for ducting a propulsion fluid is provided. The propulsion fluid flows in a given flow direction 19 parallel to the rotational axis 14. The turbine 10 further contains a rotor bucket 20 and a guide bucket 22. The rotor bucket 20 is mounted via a foot section 24 to the rotor shaft 12. The foot section 25 comprises an inserted portion 26 and an exposed portion 25. The inserted portion 24 is in the mounted position of the rotor bucket 20 completely inserted into the rotor shaft 12. The exposed portion 25 projects from the rotor shaft 12 and is therefore exposed to the propulsion fluid.

The rotor bucket 20 is a single rotor bucket 20 within a row of rotor buckets 20. The row of rotor buckets contains a number of rotor buckets 20 arranged around the circumference of the rotor shaft 12 in a given axial position, wherein each rotor bucket 20 extends radially with respect to the rotor shaft 12. Such a row of rotor buckets 20 extends in a plane perpendicular to the rotational axis 14. Therefore, only one rotor bucket 20 is shown in the drawing of fig 1.

In an axially shifted position upstream next to the rotor bucket 20 a guide bucket 22 is arranged. The guide bucket 22 also comprises a foot section 34, which is mounted in the housing 16. The guide bucket 22 is also part of a row of guide buckets 22 arranged at the inside of the circumference of the housing 16 at one axial position and extending radially with respect to the rotational axis 14. In the turbine 10 several rows of guide buckets 22 and rotor buckets 20 are arranged in an alternating sequence along the rotational axis 14. The rotor bucket 20 further comprises a blade section 27 and a shroud 28. The shroud 28 is arranged on the radially outer end of the blade section 27. Also, the guide bucket 22 comprises a blade section 36 and a shroud 38, which in this case is arranged at a radially inner end of the blade section 36. During the operation of the turbine 10 the propulsion fluid flowing in the main flow channel 18 in the flow direction 19 interacts with the blade sections 27 and 36 and thereby drives the rotor bucket 20 together with the rotor shaft 12 to rotate around the rotational axis 14.

The blade sections 27 and 36 of the rotor bucket 20 and the guide bucket 22, respectively, each have an upstream edge 30 and 39, respectively, extending radially with respect to the rotational axis 14 and facing oppositely to the flow direction 19 of the propulsion fluid. Correspondingly, each of the blade sections 27 and 36 have downstream edges 32 and 40, respectively, also extending radially and facing in the flow direction 19.

Further, the shroud 38 of the rotor bucket 20 and an outer surface 60 of the rotor shaft 12 are separated from each other by sealing cavity 54 of a so-called non-contacting seal. During operation of the turbine 10 a part of the propulsion fluid flowing in the main flow channel 18 is diverted into the sealing cavity 54. The portion of the propulsion fluid diverted into the sealing cavity 54 will be subsequently referred to as leakage fluid. The leakage fluid splits off a main fluid flow 58 of the propulsion fluid flowing in the main flow channel 18 in an area left of the shroud 38 according to fig. 1. The split off leakage fluid forms a leakage fluid flow 56, which enters the sealing cavity 54. The sealing cavity 54 contains a labyrinth-like duct structure. The labyrinth-like duct structure is in part formed by a stepped profile of a sealing surface 55 of the shroud 38 facing towards the rotor shaft 12.

The leakage fluid flow 56 subsequently enters into an outlet cavity 52 between the shroud 38 of the guide bucket 22 and an upstream surface 44 of the exposed portion 25. The upstream surface 44 extends radially with respect to the rotational axis 14 and faces roughly opposite to the flow direction 19 and is therefore oriented, such that it is directly exposed to the leakage fluid flow 56. The outlet cavity 52 or gap has an axial extension d.

The exposed portion 25 further has a flow channel surface 46, which extends essentially perpendicular to the upstream surface and partially delimits the main flow channel 18. The upstream surface 44 is connected to the flow channel surface 46 by a transition surface 48, which has a rounded profile in the sectional view along the rotor shaft 12 shown in fig. 1. The rounded profile is essentially formed from a segment of a circle having a radius of curvature of about the axial extension d of the outlet cavity 52.

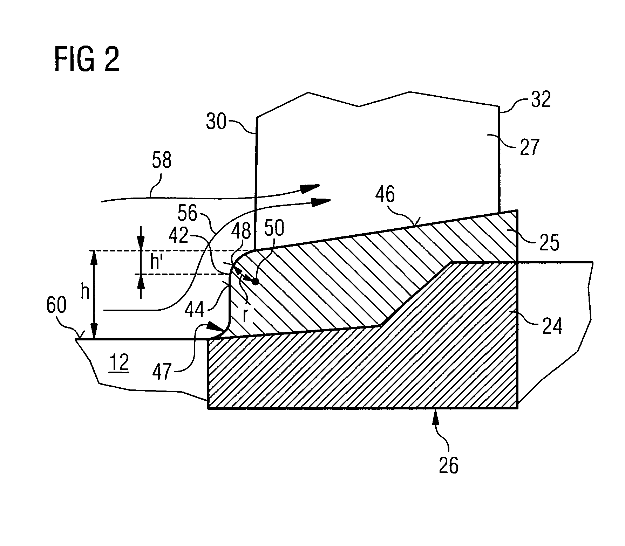

The upstream surface 44 is located at an upstream end 42 of the exposed portion 25. The upstream end 42 has a projection height h, by which the upstream end 42 protects from the rotor shaft 12 in a radial direction. The projection height h is essentially determined from the radial distance between the outer surface 60 of the rotor shaft 12 next to the exposed portion 25 and the upstream end of the flow channel surface 46 connecting to the transition surface 48. The transition surface 48 radially extends over about 30% of the given protection height h. As can be seen in fig. 2, the transition surface 48 has a radial extension h', which is about 30% of the protection height h. As can be seen further from fig. 2, the upstream surface 44 contains an abutting section 47 abutting to the outer surface 60 of the rotor shaft 12. The abutting section 47 is concavely shaped and therefore has a rounded profile in the sectional,view according to fig. 2. The upstream surface 44 and the transition surface 48 together have an "s"-shaped profile.

As can also be seen in fig. 2 the leakage fluid flow 56 is guided by the upstream surface 44 and the transition surface 48 into the main flow channel 18 to enter therein at a flat angle with respect to the rotational axis 14. The leakage fluid flow 56 therefore does not considerably disturb the main fluid flow 58 passing by in this area.

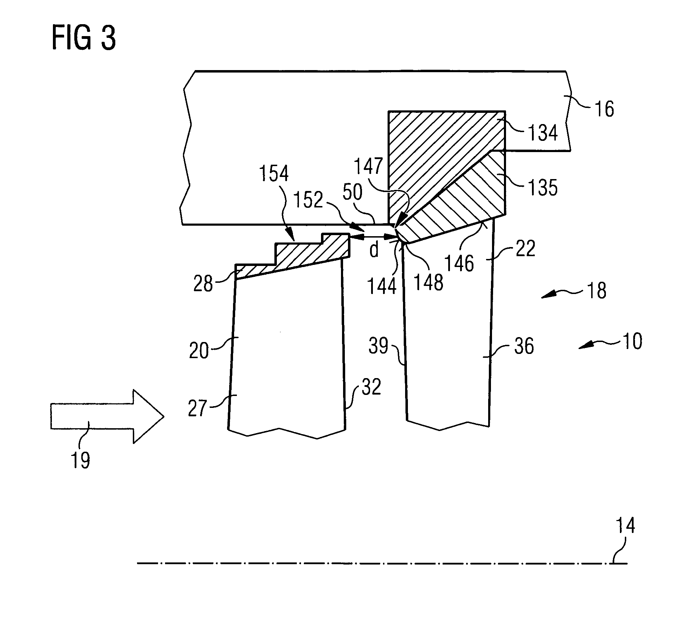

Fig. 3 shows a portion of a turbine 10 in a second embodiment according to the invention in an area of a housing 16 of the turbine 10. The same or similar reference numbers used in fig. 1 are also used for corresponding part of the turbine 10 according to fig. 3. The turbine 10 according to fig.3 comprises a guide bucket 22 having a foot section 134 and a blade section 36. The foot section 134 comprises an inserted portion 136 and an exposed portion 135. The inserted portion 136 is completely inserted into the housing 16. The exposed portion 135 projects from the housing 16 radially inwards and is therefore exposed to the propulsion fluid.

In an axially shifted position upstream next to the guide bucket 22 a rotor bucket 20 is arranged. The rotor bucket 20 also comprises a blade section 27 and a shroud 28. The shroud 28 is arranged at a radially outer end of the blade section 27. Between the shroud 28 and the housing 16 a sealing cavity 154 is formed.

The exposed portion 135 of the guide bucket 22 comprises an upstream surface 144 and a flow channel surface 146 in analogy to the upstream surface 44 and the flow channel surface 46 of the turbine 10 according to fig. 1. The exposed portion 135 further comprises a transition surface 148 and abutting section 147 in correspondence to the transition surface 48 and the abutting section 47 of the turbine 10 according to fig. 1. Regarding the arrangement and functionality of the upstream surface 144, the abutting section 147 and the transition surface 148 etc. references is made to the corresponding elements in the turbine 10 according to fig. 2 and the corresponding description. Further, the turbine 10 according to fig. 3 comprises an outlet cavity 152 corresponding to the outlet cavity 52 of the turbine 10 in fig. 1.

It is further noted, that a rotor bucket 20 according to the turbine 10 of fig. 1 can be combined with a guide bucket 22 according to of the turbine 10 according to fig.3.

## Claims

1. Bucket (20; 22) for a turbine (10) of a thermal power plant, said turbine (10) having a rotor axis (14) and a main flow channel (18) for ducting a propulsion fluid in a flow direction (19) along said rotor axis (14), said bucket (20; 22) comprising a foot section (24; 134) for mounting said bucket (20; 22) within said turbine (10),
wherein said foot section (24; 134) has an exposed portion (25; 135), which is in the mounted state exposed to said propulsion fluid and comprises an upstream surface (44; 144) and a flow channel surface (46; 146),
wherein said upstream surface (44; 144) extends transversely to said rotor axis (14) and faces opposite to said flow direction (19), and said flow channel surface (46; 146) partially delimits said main flow channel (18) in a radial direction,
**characterized by** a transition surface (48; 148), connecting said upstream surface (44; 144) and said flow channel surface (46; 146), which transition surface (48; 148) has a rounded profile in a sectional view along said rotor axis (14).

2. Bucket according to claim 1,
**characterized in that** said bucket is a rotor bucket (20) and said foot section (24) is for mounting said rotor bucket (20) to a rotor shaft (12) of said turbine (10).

3. Bucket according to claim 1,
**characterized in that** said bucket is a guide bucket (22) and said foot section (134) is for mounting said guide bucket (22) to a housing (16) of said turbine (10).

4. Bucket according to any one of the preceding claims,
**characterized in that** said upstream surface (44; 144) is located at an upstream end (42) of said exposed portion (25; 135),
which upstream end (42) has a given projection height (h), by which said upstream end (42) projects in the mounted state radially from said rotor shaft (12) or said housing (16),
wherein said transition surface (48; 148) extends over at least 20%, preferably at least 30%, of said given projection height (h).

5. Bucket according to any one of the preceding claims,
**characterized in that** said upstream surface (44; 144) comprises an abutting section (47) configured for abutting to a rotor shaft (12) and a housing (16) of said turbine (10), respectively, which abutting section (47) has a rounded profile in said sectional view.

6. Bucket according to any one of the preceding claims,
**characterized in that** said upstream surface (44; 144) and said transition surface (48; 148) together have an "s"-shaped profile in said sectional view.

7. Turbine (10) for a thermal power plant comprising a bucket (20; 22) according to any one of the preceding claims.

8. Turbine according to claim 7,
**characterized in that** said turbine (10) further comprises a second bucket (22; 20),
which is arranged radially with respect to said rotor axis (14) and has an end portion (38; 28) facing in a radial direction with respect to said rotor axis (14),
wherein said end portion (38; 28) and said upstream surface (44; 144) of said first bucket (20; 22) are separated from each other by a gap having a given axial extension (d, d'),
wherein at least a segment of said rounded profile of said transition surface (48; 148) has a radius of curvature of at least 50%,
preferably at least 100% of said axial extension (d, d') of said gap.

9. Turbine according to claim 7 or 8,
**characterized in that** said turbine (10) comprises a guide bucket (22) mounted adjacent to said first bucket (20), being a rotor bucket, in an upstream direction therefrom, such that a sealing cavity (54) between a rotor shaft (12) of said turbine (10) and said guide bucket (22) is formed,
wherein said exposed portion (25) of said first bucket (20) is directly exposed to a leakage fluid flow (56) of said propulsion fluid leaking through said sealing cavity (54) during the operation of said turbine (10).

10. Turbine according to claim 7 or 8,
**characterized in that** said turbine (10) comprises a rotor bucket (20) mounted adjacent to said first bucket (22), being a guide bucket, in an upstream direction there from such that a sealing cavity (154) between a housing (16) of said turbine (10) and said rotor bucket (20) is formed,
wherein said exposed portion (135) of said first bucket (22) is directly exposed to a leakage fluid flow of said fluid leaking through said sealing cavity (154) during operation of said turbine (10).
